(19) Europäisches Patentamt
European Patent Office
Office européen des brevets

(11) **EP 1 918 702 A2**

(12) **EUROPÄISCHE PATENTANMELDUNG**

(43) Veröffentlichungstag:
**07.05.2008 Patentblatt 2008/19**

(51) Int Cl.:
***G01N 29/07*** *(2006.01)* ***G01N 29/44*** *(2006.01)*

(21) Anmeldenummer: **07018699.4**

(22) Anmeldetag: **24.09.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **06.11.2006 DE 102006052535**

(71) Anmelder: **DB Fernverkehr AG**
**60326 Frankfurt (DE)**

(72) Erfinder:
• **Hintze, Hartmut**
**14715 Milow (DE)**
• **Ettlich, Ralf**
**14774 Brandenburg (DE)**

(74) Vertreter: **Zinken-Sommer, Rainer**
**Deutsche Bahn AG**
**Patentabteilung**
**Völckerstrasse 5**
**80939 München (DE)**

(54) **Verfahren zur Ermittlung des Zustandes von Oberflächenschäden in Radlaufflächen von Schienenfahrzeugen**

(57) Die Erfindung betrifft ein Verfahren zur Ermittlung des Zustandes von Oberflächenschäden in Radlaufflächen von Schienenfahrzeugen für die Bestimmung eines optimalen Profilierungszeitpunktes von scheibengebremsten Radsätzen.

Der Erfindung liegt die Aufgabe zugrunde mit Hilfe eines verlässlichen Überwachungsverfahrens und unter Beachtung der jeweiligen Schädigungsgrades für die Radlauffläche von Schienenfahrzeugen einen optimalen Zeitpunkt und eine notwendige Tiefe der Reprofilierung der Lauffläche zu ermitteln, sodass die Laufleistung der Räder bis zum Grenzmaß deutlich gesteigert werden kann.

Dies wird erfindungsgemäß dadurch erreicht, dass die Radlaufflächen von scheibengebremsten Radsätzen mit Ultraschalloberflächenwellen beaufschlagt, die Schallschwächung der Ultraschalloberflächenwellen (Rayleighwellen) nach der Beziehung

$$S_w = \frac{20 \times lg \; \dfrac{H_{Un}}{H_{U\,n+1}}}{\Delta s}$$

gemessen und /oder ermittelt wird, wobei
$S_w$ - Schallschwächung
$H_U$ - Höhe der Umlaufsignalamplitude in dB
$\Delta s$ - definierter Laufweg in mm
bedeutet, daraus die Breite und die Tiefe der Schädigung ermittelt, diese Schädigung in Schädigungszonen und Schädigungsklassen eingeteilt sowie zugeordnet und daraus die notwendige Reprofilierungstiefe und der Reprofilierungszeitpunkt der Radlauffläche ermittelt wird.

**Figur 1**

**Beschreibung**

Die Erfindung betrifft ein Verfahren zur Ermittlung des Zustandes von Oberflächenschäden in Radlaufflächen von Schienenfahrzeugen für die Bestimmung eines optimalen Profilierungszeitpunktes von scheibengebremsten Radsätzen.

An den Radlaufflächen von scheibengebremsten Radsätzen, bilden sich im Betriebseinsatz durch die Rad-Schiene-Kontaktbeanspruchung umlaufende Risszonen aus. Diese umlaufenden Schädigungen haben in der Regel eine sehr ähnliche Lage im Bereich der Radlaufflächen.

Bekannt ist eine Ultraschall-Prüfvorrichtung zur zerstörungsfreien Prüfung der Lauffläche von Schienenfahrzeugen mittels Ultraschall-Oberflächenwellen, bei der ein Ultraschallwandler in einer im Schienenkopf einer Schiene außermittig ausgebildeten, zur Schienenkopfoberfläche hin offenen Ausnehmung angeordnet ist, wobei der Wandler an der Schiene mittels elastischer Elemente in der Ausnehmung federnd bewegbar angebracht ist (DE 35 05 260 A1). Eine sehr ähnliche Vorrichtung ist aus der DE 18 453 C2) bekannt.

Weiterhin ist ein Verfahren und eine Vorrichtung zur zerstörungsfreien Prüfung von Eisenbahnrädern mittels Ultraschall bekannt, wobei mittels einer Spule an der Oberfläche des Rades ein wechselndes Magnetfeld im Rad erzeugt wird, das wiederum eine Länge- bzw. Volumenänderung des Materials bewirkt, wodurch die Ultraschallwelle generiert wird (DE 197 28 508 A1). Das Verfahren soll auch beim Vorliegen vieler kleiner Risse eine zuverlässige Aussage zu sicherheitsrelevanten großen Rissen liefern, ohne dass unnötige Fehlalarme gegeben werden.

Die EP 0 704 700 B1 beschreibt einen Ultraschallwandler zur Prüfung von Eisenbahnrädern auf Risse und dgl. mit einer nach einem elektrodynamischen Verfahren arbeitenden Sendeeinheit zur impulsweisen Aussendung von Ultraschallsignalen und mindestens einer Empfangseinheit zum Empfang der zugeordneten Echosignale, wobei die Sendeeinheit und jede der Empfangseinheiten starr miteinander verbunden und um einen Abstand (A) voneinander entfernt angeordnet sind, wobei der Abstand (A) zwischen der Mittellinie der Sendeeinheit einen bestimmten Wert ausmacht. Auch diese Anordnung soll die Risserkennung sicherer machen.

Alle bekannten Verfahren und Vorrichtungen haben gemeinsam:

1. es ist nicht möglich einen optimalen Zeitpunkt für die Reprofilierung der Radlaufflächen verlässlich zu ermitteln

2. es ist nicht möglich eine Aussage zu treffen, mit welcher Spantiefe eine optimale Reprofilierung durchgeführt werden soll

3. aufgrund der fehlenden verlässlichen Daten erfolgt aus sicherheits- und komforttechnischen Erwägungen das Abdrehen der Radlaufflächen bislang nach festgelegter Laufleistung

4. damit erfolgt häufig eine Reprofilierung, obwohl diese auf Grund Zustandes der Lauffläche zu diesem Zeitpunkt, noch nicht erforderlich ist. zu tief (zu große Spanabhebung)

5. anderseits wird der Zeitpunkt einer Reprofilierung mit geringer notwendiger Spantiefe verpasst und ein hoher Spanabtrag ist erforderlich

6. die nichtzustandsbezogene Reprofilierung verringert die Laufleistung der Räder bis zum Austausch überproportional

Der Erfindung liegt die Aufgabe zugrunde mit Hilfe eines verlässlichen Überwachungsverfahrens und unter Beachtung der jeweiligen Schädigungsgrades für die Radlauffläche von Schienenfahrzeugen einen optimalen Zeitpunkt und eine notwendige Tiefe der Reprofilierung der Lauffläche zu ermitteln, sodass die Laufleistung der Räder bis zum Grenzmaß deutlich gesteigert werden kann.

Dies wird erfindungsgemäß dadurch erreicht, dass die Radlaufflächen von scheibengebremsten Radsätzen mit Ultraschalloberflächenwellen beaufschlagt, die Schallschwächung der Ultraschalloberflächenwellen (Rayleighwellen) nach der Beziehung

$$S_w = \frac{20 \times lg \; \frac{H_{Un}}{H_{U\,n+1}}}{\Delta s}$$

gemessen und /oder ermittelt wird, wobei

$S_w$-   Schallschwächung
$H_U$-   Höhe der Umlaufsignalamplitude in dB
$\Delta s$-   definierter Laufweg in mm

bedeutet, daraus die Breite und die Tiefe der Schädigung ermittelt, diese Schädigung in Schädigungszonen und Schädigungsklassen eingeteilt sowie zugeordnet und daraus die notwendige Reprofilierungstiefe und der Reprofilierungszeitpunkt der Radlauffläche ermittelt wird.

Die Beaufschlagung der Radlaufflächen von scheibengebremsten Radsätzen mit Ultraschalloberflächenwellen erfolgt bis in einer Tiefe von 10 mm.

Der Bereich, der in Querrichtung des Radkranzes bei der Prüfung mit Rayleighwellen erfasst wird, entspricht in etwa der Breite der Ultraschallwandler (ca. 50 mm).

Im erfundenen Verfahren wird im speziellen, die Schwächung dieser Rayleighwellen in Abhängigkeit vom Schädigungszustand der Schädigungszone in den Radlaufflächen ausgewertet. Mit Ausdehnung der Schädigungszone in Querrichtung (Breite b) wird die Ausbreitung der dort angeregten Rayleighwellen beeinflusst, d.h. die umlaufenden Rayleighwellen werden geschwächt.

Die ermittelten Schallschwächungswerte von 0-6 dB/m werden erfindungsgemäß in Klassen eingeteilt und definierten Schädigungsklassen (bsp. vgl. Tabelle) der Schädigungszone zugeordnet.

Die Schädigungsklassen repräsentieren einen konkreten Zustand (Breite b und Tiefe t) der umlaufenden Schädigungszone an der Radlauffläche.

Die Schädigungsklasse gilt als Grenzwert für die Beseitigung dieser Oberflächenschäden durch Reprofilierung (vgl. Tabelle) der Räder mit einer bestimmten, wirtschaftlich optimalen Profilierungstiefe. Nach aufwendigen und umfangreichen Versuchen wurde gefunden, dass sich aus einer bestimmten Schädigungsklasse die notwendige Profilierungstiefe ableiten lässt.

Tabelle : Beispiel Schädigungsklassen

| Schädigungsklasse | Schallschwächung in dB/m | Schädigungstiefe in mm | Spantiefe in mm |
|---|---|---|---|
| 1 | 0-1 | < 1 | noch keine Reprofilierung |
| 2 | 1-2 | 1-1,5 | 2 |
| 3 | 2-4 | 1,5-2,5 | 3 |
| 4 | 4 - 6 | > 2,5 | >3 mm in Abhängigkeit von der visuellen Beurteilung bei der Reprofilierung |

Vorteile der Erfindung:

- der Zeitpunkt zur Durchführung einer Reprofilierungsmaßnahme in Abhängigkeit vom Zustand der Lauffläche ist genau ermittelbar
- die Reprofilierungstiefe ist exakt ermittelbar, sodass kein unnötig dicker Span abgehoben wird
- noch nicht erforderliche Reprofilierungen werden vermieden
- die Zeitpunkte mit geringer erforderlicher Spantiefe bei der Reprofilierung können exakt bestimmt werden
- die Laufleistung der Räder bis zum Erreichen des Grenzmaßes kann deutlich erhöht werden

**Ausführungsbeispiel**

Anhand eines Ausführungsbeispieles soll nachstehend die Erfindung näher erläutert werden.

Dabei zeigen:

- Figur 1 - die vorhandenen Schädigungszonen im Bereich der Laufflächen
- Figur 2 - die Einteilung der Schallschwächung in Schädigungsklassen in Abhängigkeit von Schallhöhe und Laufweg
- Figur 3 - die Zuordnung von Schädigungsklasse und Risstiefe

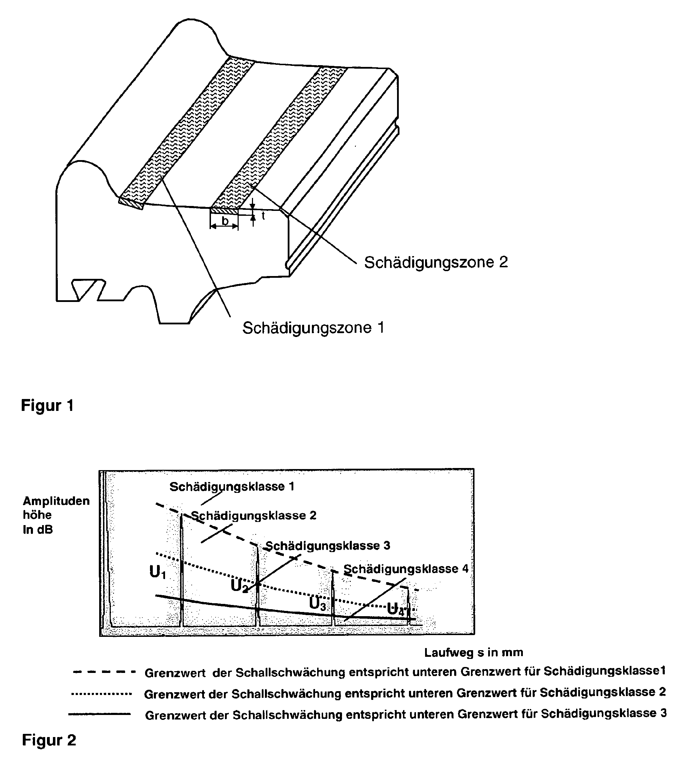

Figur 1 zeigt die beiden gängigen Schädigungszonen im Bereich der Lauffläche von scheibengebremsten Radsätzen mit ihren Ausdehnungen in Breite und Tiefe.

Figur 2 zeigt im Beispiel die Klassifizierung der Schallschwächung auf Grund der Höhe der Umlaufsignale von den Ultraschalloberflächenwellen mit den dazugehörigen Grenzwerten für die Einstufung der Schädigungsklassen entsprechend geschädigter Radlaufflächen.

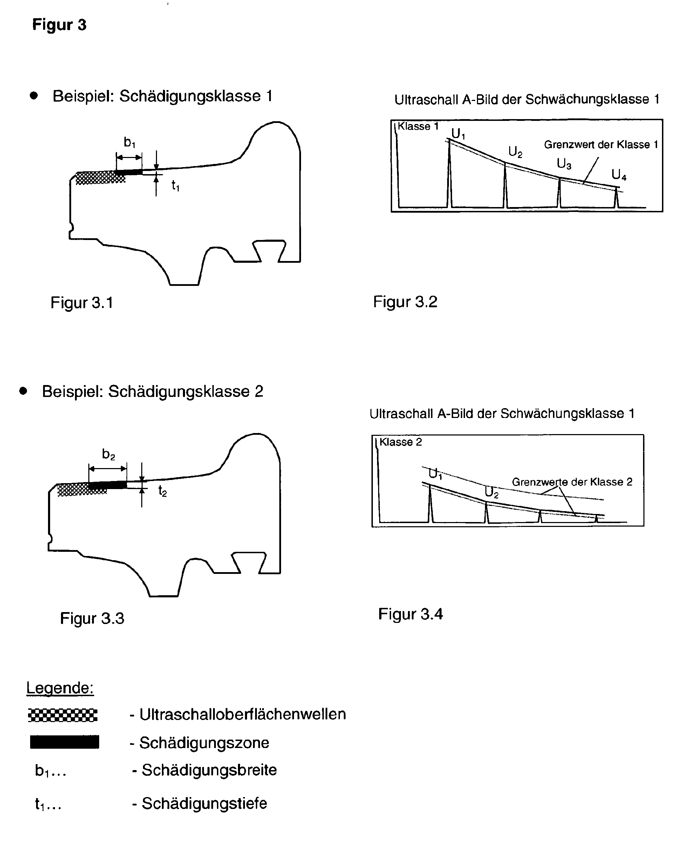

Die Figuren 3.1 bis 3.4 zeigen den Einfluss des Schädigungsquerschnittes auf die Ausbreitung der Ultraschalloberflächenwellen und die daraus bedingte Schwächung dieser Ultraschalloberflächenwellen am Beispiel zweier Schädigungszustände. In Figur 3.1 ist die umlaufende geschädigt Zone an der Lauffläche des Rades im Querschnitt (Breite b x Tiefe t) noch sehr klein. Die angeregten Ultraschalloberflächenwellen werden durch die Schädigungszone kaum beeinflusst und können sich umlaufend ohne den Schwächungsanteil aus der Schädigungszone ausbreiten. In der nebenstehenden Figur 3.2 sind die Umlaufsignalamplituden U1-U4 der Ultraschallwellen im Ultraschall A-Bild dargestellt, welche durch die Schädigung nahezu unbeeinflusst sind. Der hier erkennbare Abfall der Umlaufsignalamplitudenhöhe von U1 bis U4, ist auf die immer vorhandene wegabhängige Schallschwächung zurückzuführen.

Diese Signalhöhen werden im Beispiel als nahezu durch den Schädigungszustand unbeeinflusste Schwächung der Ultraschalloberflächenwellen klassifiziert (im Beispiel mit Klasse 1). Abgeleitet wird aus diesem Schwächungszustand der Querschnitt der ausgebildeten Schädigungszone, welcher ebenfalls hier im Beispiel mit Klasse 1 klassifiziert wird. Da die Breite b und Tiefe t der Schädigungszone in einem proportionalen Verhältnis zueinander stehen, kann aus der gemessenen Schwächung der Ultraschallwellen, direkt die Tiefe t der Schädigungszone bestimmt werden. Für die Klassifizierung der schädigungsbedingten Schallschwächung werden Grenzen festgelegt. Die Grenzwerte bilden jeweils den Übergang zur nächsten Schwächungsklasse und daraus abgeleitet, den Übergang zur nächsten Schädigungsklasse mit einer aus Messungen und Untersuchungen ermittelten max. Schädigungstiefe für diese Klasse.

In Figur 3.3 ist ein weiterer Schädigungszustand mit dem dazugehörigen Ultraschall A-Bild (Figur 3.4), welches durch die Schädigungszone geschwächte Umlaufsignalamplituden zeigt, dargestellt. Die Höhen der Umlaufsignalamplituden U1 bis U4 sind hier niedriger als Figur 3.2 und liegen zwischen den beiden für die Schallschwächungsklasse 2 festgelegten Grenzwerten.

Diese höhere Schallschwächung resultiert aus dem klassifizierten größeren Schädigungsquerschnitt der Schädigungsklasse 2, welcher die Ausbreitung der Ultraschalloberflächenwellen so beeinflusst, dass die Umlaufsignale in ihrer Höhe nur noch der Schwächungsklasse 2 entsprechen.

## Patentansprüche

1. Verfahren zur Ermittlung des Zustandes von Oberflächenschäden in Radlaufflächen von Schienenfahrzeugen, **gekennzeichnet dadurch, dass** die Radlaufflächen von scheibengebremsten Radsätzen mit Ultraschalloberflächenwellen (Rayleighwellen) beaufschlagt, die Schallschwächung der Ultraschalloberflächenwellen auf Grund der umlaufenden Lauflächenschädigung nach der Beziehung

$$S_w = \frac{20 \times lg \, \dfrac{H_{Un}}{H_{U\,n+1}}}{\Delta s}$$

gemessen und /oder ermittelt wird, wobei

$S_w$ - Schallschwächung
$H_U$ - Höhe der Umlaufsignalamplitude in dB
$\Delta s$ - definierter Laufweg in mm

bedeutet, die ermittelten Schallschwächungswerte klassifiziert, daraus die Breite und Tiefe der Schädigungszone im geprüften Rad abgeleitet und ebenfalls klassifiziert und daraus der Reprofilierungszeitpunkt sowie die Reprofilierungstiefe für den Radsatz abgeleitet wird.

**Figur 1**

**Figur 2**

**Figur 3**

• Beispiel: Schädigungsklasse 1

$b_1$

$t_1$

Figur 3.1

Ultraschall A-Bild der Schwächungsklasse 1

Klasse 1

$U_1$

$U_2$

Grenzwert der Klasse 1

$U_3$

$U_4$

Figur 3.2

• Beispiel: Schädigungsklasse 2

$b_2$

$t_2$

Figur 3.3

Ultraschall A-Bild der Schwächungsklasse 1

Klasse 2

$U_1$

$U_2$

Grenzwerte der Klasse 2

Figur 3.4

Legende:

- Ultraschalloberflächenwellen

- Schädigungszone

$b_1$...        - Schädigungsbreite

$t_1$...        - Schädigungstiefe

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3505260 A1
- DE 18453 C2
- DE 19728508 A1
- EP 0704700 B1